# FASCICULE DE BREVET EUROPEEN

(11) **EP 0 659 544 B1**
(45) Date de publication et mention de la délivrance du brevet: **15.09.1999**
(21) Numéro de dépôt: 94119485.4
(22) Date de dépôt: 09.12.1994
(51) Int. Cl.: B29D 30/56, B29C 59/00, B24C 3/32

(54) **Procédé et dispositif de traitement avant collage de surfaces caoutchoutiques vulcanisées**
Verfahren und Vorrichtung zum Behandeln von vulkanisierten Gummioberflächen vor dem Kleben
Process and apparatus for treating vulcanized rubber surfaces before glueing

(30) Priorité: 20.12.1993 FR 9315408
(43) Date de publication de la demande: 28.06.1995
(73) Titulaire: COMPAGNIE GENERALE DES ETABLISSEMENTS MICHELIN - MICHELIN & CIE, 63040 Clermont-Ferrand Cédex (FR)
(72) Inventeur: Courel, Jean-Marie, F-63350 Maringues (FR); Schruoffeneger, Denis, F-63140 Chatel-Guyon (FR); Solignac, Serge, F-63122 Ceyrat (FR)
(74) Mandataire: Bauvir, Jacques

(56) Documents cités:
- DE-A- 3 343 611
- FR-A- 2 630 667
- US-A- 4 193 635
- US-A- 4 240 851
- DATABASE WPI Week 9050, Derwent Publications Ltd., London, GB; AN 90-372423 & JP-A-2 269 600 (MASUOKA SEISAKUSHO) 2 Novembre 1990
- DATABASE WPI Week 9201, Derwent Publications Ltd., London, GB; AN 92-003440 & JP-A-3 256 698 (HITACHIZOSEN CORP.) 15 Novembre 1991

## Description

L'invention concerne le collage de matériaux caoutchoutiques et plus particulièrement les procédés de traitement, avant collage, des surfaces de matériaux caoutchoutiques vulcanisés, constituants de pneumatiques.

Le rechapage d'un pneumatique consiste à le déchaper, c'est-à-dire enlever par une opération d'usinage ce qui reste de la bande de roulement usée, puis à mettre en place une nouvelle bande de roulement. Le rechapage nécessite d'établir une bonne liaison mécanique entre les matériaux du sommet dudit pneumatique et la nouvelle bande de roulement, prévulcanisée ou non.

On réalise usuellement cette liaison mécanique en intercalant entre le sommet et la nouvelle bande de roulement une gomme de liaison non vulcanisée. En conséquence, lorsqu'on rechape avec une bande de roulement prévulcanisée, il faut obtenir un excellent collage entre, d'une part, la gomme de liaison (non vulcanisée), et, d'autre part, les matériaux du sommet ainsi que la nouvelle bande de roulement (vulcanisés).

De même lors d'une réparation d'un pneumatique, un excellent collage est à obtenir entre les matériaux des zones blessées, après avoir retiré leurs parties dégradées, et un matériau de réparation non vulcanisé accompagné ou non d'une pièce de renfort ou "emplâtre" vulcanisée.

Pour obtenir ces bons collages, il faut, en particulier, que les surfaces des matériaux vulcanisés soient propres, que leurs particules superficielles oxydées ou dégradées soient enlevées, qu'elles aient une rugosité appropriée et que la mise en contact avec le matériau non vulcanisé soit faite dans de bonnes conditions avec, notamment, une pression d'application suffisante.

Dans le cas du rechapage de pneumatiques, l'usinage destiné à enlever ce qui reste de la bande de roulement usée peut être réalisé de plusieurs façons. Une première méthode consiste à utiliser une "cardeuse". Une telle machine utilise comme outil abrasif rotatif un ensemble de disques métalliques ayant des dents abrasives sur leurs circonférences extérieures, ces disques étant assemblés perpendiculairement à un axe de rotation commun. Le cardage permet d'enlever ce qui reste de la bande de roulement usée et ainsi d'amener le sommet de la carcasse au profil géométrique souhaité tout en donnant à la surface caoutchoutique une rugosité appropriée au collage ultérieur. Un exemple de rugosité appropriée est fourni par les plaques de référence établies pour le rechapage et la réparation des pneumatiques par la Rubber Manufacturers Association. Cet usinage par cardage, simple et efficace, est très couramment utilisé. Il présente cependant les inconvénients d'entraîner un fort échauffement de la surface caoutchoutique qui peut la dégrader, de produire de nombreux débris de matériaux caoutchoutiques à évacuer par aspiration et d'offrir des conditions de travail difficiles pour les opérateurs en raison de la pollution due au bruit et à la poudrette de gomme.

Une autre méthode consiste à retirer ce qui reste de la bande de roulement usée avec des couteaux, à froid ou à chaud, mais après cet usinage, les surfaces caoutchoutiques obtenues sont lisses ce qui nécessite une opération ultérieure de brossage ou de cardage pour créer la rugosité de surface nécessaire expérimentalement pour une bonne fiabilité du collage.

Une zone critique de la liaison mécanique entre le sommet du pneumatique et la nouvelle bande de roulement est celle située aux deux bords latéraux de ladite nouvelle bande de roulement. Selon la géométrie de la bande de roulement utilisée, bande plate, bande à bavettes, bande cintrée..., les bords latéraux ou bavettes ou "ailes" sont liés aux bords du sommet ou aux épaules du pneumatique. Cette zone est mécaniquement très sollicitée lors du roulage et on constate que tout défaut de collage entraîne l'apparition puis la propagation de fissures. Ces fissures peuvent ensuite se propager le long des interfaces entre la gomme de liaison et le sommet ou la bande de roulement, elles peuvent aussi pénétrer directement dans les matériaux du sommet ou des épaules.

L'invention a pour objet un procédé de rechapage de pneumatiques comportant une étape de traitement, avant collage, de surfaces caoutchoutiques vulcanisées qui permette de nettoyer ces surfaces et de créer une rugosité appropriée pour un excellent collage sans qu'il soit nécessaire de pratiquer une opération de cardage ou de brossage.

L'application de cette étape de traitement à la réparation de pneumatiques, à la fabrication de bandes de roulement prévulcanisées ainsi qu'à la fabrication de pneumatiques neufs constitue un autre objet de l'invention.

Dans le cas du rechapage, un objectif particulier de l'invention est de réaliser un excellent collage dans la zone située entre les deux bords latéraux de la nouvelle bande de roulement et le sommet ou les épaules.

On entend par "carcasse" de pneumatique, soit un pneumatique ayant roulé dont les restes de bande de roulement usée ont été retirés par une opération d'usinage, soit un pneumatique neuf, vulcanisé, auquel il ne manque que la bande de roulement.

L'étape de traitement, avant collage, de surfaces caoutchoutiques vulcanisées, selon l'invention, comprend la création de rugosité de surface et l'élimination des particules superficielles dégradées, par application d'un jet d'eau à haute pression.

Cette étape de traitement de surfaces caoutchoutiques avant collage a l'avantage de donner des surfaces propres, exemptes de pollution, et possédant une rugosité fine et régulière adaptée à un collage d'excellente qualité.

De multiples conditions opératoires d'application d'un jet d'eau à haute pression permettent de créer une rugosité de surface selon l'invention.

Selon un mode de réalisation préférentiel, on utilise un jet d'eau dont une section, normale à la direction d'application dudit jet d'eau, a une forme sensiblement elliptique avec un rapport entre le grand axe de l'ellipse et le petit axe de l'ellipse supérieur à 6.

Ce jet d'eau "plat" est préférentiellement appliqué de telle sorte que la direction du déplacement relatif dudit jet d'eau par rapport auxdites surfaces caoutchoutiques est perpendiculaire au grand axe de ladite ellipse de ladite section du jet d'eau.

L'utilisation d'un tel jet d'eau plat, avec une telle orientation par rapport à la direction du déplacement relatif des surfaces caoutchoutiques traitées permet de traiter à chaque instant une bande de ladite surface caoutchoutique sans que ce traitement n'ait d'effet au delà de la zone superficielle de ladite surface caoutchoutique.

Selon la nature du matériau caoutchoutique vulcanisé traité, la pression d'alimentation de l'eau est comprise entre 100 et 250 MPa. Pour éviter que l'application d'un jet d'eau avec de telles pressions n'entraîne des découpes dans les surfaces caoutchoutiques traitées, il est très important d'avoir une vitesse de déplacement relative entre le jet d'eau et les surfaces traitées élevée ; une vitesse comprise entre 50 et 300 m/mn est appropriée.

Selon une autre caractéristique, l'eau à haute pression est projetée sur les surfaces caoutchoutiques vulcanisées à une distance comprise entre 8 et 20 mm.

L'invention a aussi pour objet un dispositif de mise en oeuvre des procédés précédents.

Ce dispositif, utilisant de l'eau pressurisée, comprend une conduite d'alimentation de l'eau pressurisée, ladite conduite étant terminée par une buse, et comporte des moyens de support et de déplacement relatif desdites surfaces caoutchoutiques vulcanisées par rapport à ladite buse. Ladite buse a un orifice de sortie de l'eau obtenu par l'intersection d'un cône et d'un dièdre, l'axe dudit cône étant perpendiculaire à la droite d'intersection des deux plans dudit dièdre.

Selon une autre caractéristique, une projection dudit orifice de sortie, selon un plan perpendiculaire à l'axe dudit cône, a une forme elliptique avec un rapport entre le grand axe de l'ellipse et le petit axe de l'ellipse de l'ordre de 1,4.

Avantageusement, l'angle au sommet dudit cône est compris entre 25 et 35° et l'angle dudit dièdre est compris entre 65 et 70°.

Selon un mode de réalisation préférentiel, la longueur du grand axe de ladite ellipse de ladite projection plane dudit orifice de sortie de la buse est comprise entre 0,30 et 0,40 mm.

Le procédé de rechapage de pneumatiques, selon l'invention, est caractérisé en ce que, après avoir retiré ce qui reste de la bande de roulement usée par usinage avec des moyens connus et avant d'appliquer une nouvelle bande de roulement, on traite la surface du sommet et des épaules dudit pneumatique par application d'un jet d'eau à haute pression pour créer une rugosité de surface et éliminer des particules superficielles.

Ce procédé est particulièrement indiqué lorsque l'usinage du sommet du pneumatique à rechaper est réalisé avec un couteau de déchapage. La surface issue de l'usinage, pratiquement lisse, peut alors être soumise à un jet d'eau à haute pression sans qu'il soit nécessaire d'utiliser un moyen d'usinage tel que carde ou brosse.

La rugosité d'une surface caoutchoutique peut être caractérisée au moyen d'un profilomètre à laser. Cet appareil mesure, en particulier, le paramètre Rₐ : moyenne arithmétique de toutes les valeurs du profil de rugosité sur une longueur d'évaluation donnée lₘ (DIN 4768).

Ce procédé de rechapage, selon l'invention, est encore caractérisé en ce que, après avoir été traitée, la rugosité Rₐ de la surface du sommet de la carcasse est supérieure ou égale à 10 micromètres.

L'étape de traitement de l'invention peut aussi s'appliquer à la réparation des pneumatiques. Le procédé de réparation de pneumatiques résultant est caractérisé en ce que, après avoir retiré d'une zone blessée dudit pneumatique, avec des moyens connus, les matériaux dégradés et avant d'appliquer un matériau d'apport ou un emplâtre de réparation sur ladite zone blessée, on traite ladite zone par l'application d'un jet d'eau à haute pression pour créer une rugosité de surface et éliminer des particules superficielles.

L'invention a aussi pour objet un procédé de fabrication d'une bande de roulement prévulcanisée caractérisé en ce que, à la sortie du moule de vulcanisation, la surface de la semelle de ladite bande de roulement est soumise à un jet d'eau à haute pression pour créer une rugosité de surface.

Ce procédé de fabrication d'une bande de roulement prévulcanisée peut aisément et avantageusement inclure les bords latéraux intérieurs et extérieurs de ladite bande de roulement.

Cela présente l'avantage de traiter toutes les surfaces qui peuvent venir en contact avec la gomme de liaison, notamment lorsque ladite gomme de liaison déborde sur les bords latéraux extérieurs de ladite bande de roulement pendant la phase ultérieure de cuisson de l'assemblage carcasse et bande de roulement.

Si le procédé de fabrication de ladite bande de roulement entraîne l'existence de bavures de moulage situées sur l'un de ses bords latéraux au moins, le procédé selon l'invention peut comprendre une phase de découpe desdites bavures au moyen du jet d'eau à haute pression.

En conséquence, ces bavures ne peuvent plus être des amorces de fissures et la fiabilité de la liaison mécanique entre la carcasse et la bande de roulement est grandement renforcée.

Enfin, l'étape de traitement selon l'invention peut aussi avantageusement s'appliquer à la fabrication de pneumatiques neufs. Selon ce procédé, après avoir réalisé une carcasse de pneumatique prévulcanisée ainsi qu'une bande de roulement prévulcanisée et, avant leur assemblage avec des moyens connus, on traite la surface du sommet et des épaules de ladite carcasse avec un jet d'eau à haute pression pour créer une rugosité de surface.

Les figures suivantes illustrent le procédé de traitement de surfaces avant collage selon l'invention et décrivent un dispositif pour sa mise en oeuvre :
- la figure 1 est un schéma de principe d'un dispositif de mise en oeuvre du procédé selon l'invention pour le traitement d'une carcasse de pneumatique;
- la figure 2 est une coupe axiale d'une buse d'application d'un jet d'eau à haute pression;
- la figure 3 présente une coupe axiale d'une buse d'application d'un jet d'eau à haute pression, vue selon E tel qu'indiqué à la figure 2;
- la figure 4 est une vue de l'orifice de sortie de l'eau hors de la buse, vue selon la direction F indiquée sur la figure 3;
- la figure 5 représente un profil de rugosité d'un échantillon de bande de roulement issu d'une cuisson en moule lisse et avant traitement selon l'invention;
- la figure 6 est un profil de rugosité, avec une échelle des ordonnées quatre fois plus petite, d'un échantillon similaire au précédent après le traitement avant collage;
- la figure 7 est un profil de rugosité, à la même échelle que la figure 6, d'un échantillon de référence du Rubber Manufacturers Association, celui de RMA 3;
- la figure 8 indique les étapes du procédé de rechapage traditionnel;
- la figure 9 présente les étapes du procédé de rechapage avec application du procédé de traitement de surface selon l'invention;
- la figure 10 est une coupe axiale partiellement éclatée de pneumatique;
- la figure 11 présente une coupe de bande de roulement prémoulée et prévulcanisée pour le rechapage d'une carcasse, dite "bande plate"
- la figure 12 montre un dispositif de maintien d'une bande plate pour son traitement selon l'invention;
- la figure 13 présente le procédé de traitement d'un bord de la semelle de la bande plate;
- la figure 14 montre une coupe transversale du bord latéral de la liaison mécanique obtenue après cuisson entre une bande plate et le sommet et l'épaule d'une carcasse;
- la figure 15 est une variante de la figure 14 dans le cas d'un recouvrement de l'extrémité extérieure de la bande de roulement par la gomme de liaison;
- la figure 16 présente le procédé de traitement d'un bord de la semelle d'une bande de roulement prémoulée et prévulcanisée en anneau;
- la figure 17 est une coupe similaire à la figure 14 dans le cas d'une bande de roulement en anneau.

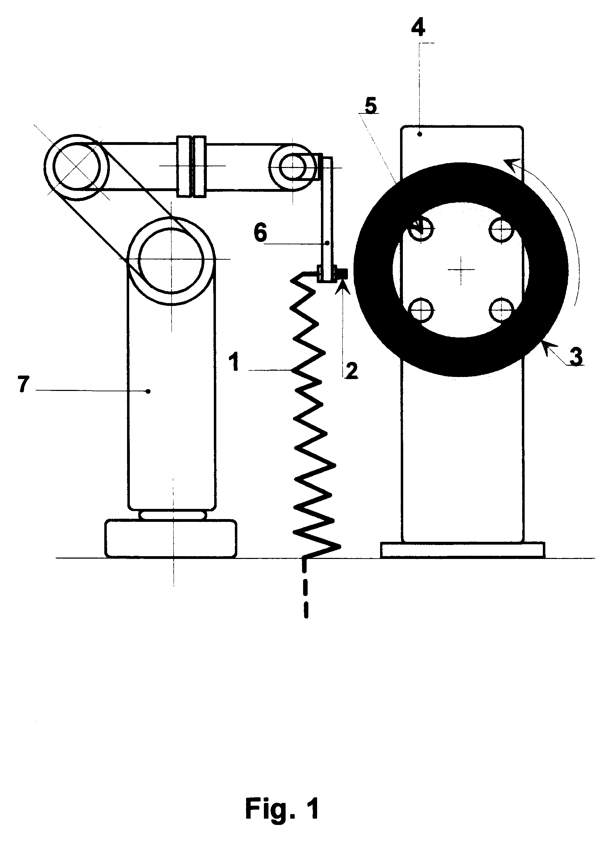

Un dispositif de mise en oeuvre du procédé de l'invention pour le traitement d'une carcasse de pneumatique est présenté à la figure 1.

Ce dispositif comprend une pompe (non représentée) de pressurisation et d'alimentation (Jet-Edge n°36-100) d'eau sous pression, une conduite d'alimentation 1 qui se termine par une buse 2.

La carcasse de pneumatique 3 est mise en place sur le bâti 4. Ladite carcasse est entraînée en rotation par les quatre supports cylindriques rotatifs 5. Dans tous les cas, la carcasse 3 a été mise en rotation avant tout début d'application d'un jet d'eau sous pression, et n'a été arrêtée qu'après l'arrêt de ladite application du jet d'eau sous pression.

La buse 2 est fixée au bras 6 d'un robot 7 qui permet un déplacement à vitesse linéaire imposée et selon des trajectoires déterminées relativement aux surfaces intérieures et extérieures de la carcasse de pneumatique 3.

Ce dispositif se caractérise par une grande souplesse d'utilisation : les caractéristiques du jet d'eau (pression d'alimentation, débit) ainsi que les conditions de son application (distance, trajectoires et vitesses de déplacement relatives) sont réglables.

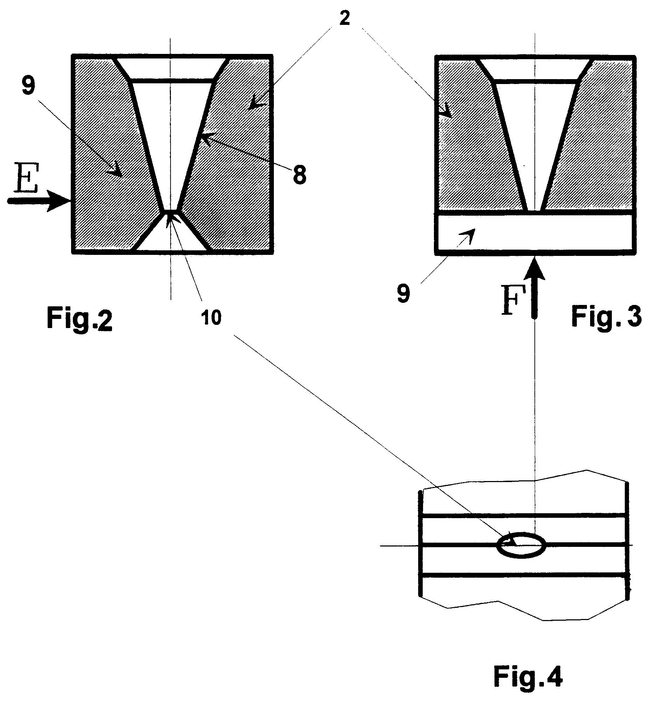

La géométrie de l'orifice 10 de sortie de l'eau sous pression au dehors de la buse 2 est le résultat de l'intersection entre un cône 8 et un dièdre 9. L'axe dudit cône 8 est perpendiculaire à la droite d'intersection des deux plans dudit dièdre 9 (figures 2 à 4).

L'angle au sommet du cône 8 est, de préférence, compris entre 25 et 35° et l'angle du dièdre 9 entre 65 et 70°.

Une projection plane, selon l'axe du cône 8, de l'orifice de sortie 10 a une forme elliptique avec un rapport entre le grande axe de l'ellipse et le petit axe de l'ellipse de l'ordre de 1,4. La longueur du grand axe de cette ellipse est comprise entre 0,30 et 0,40 mm.

La buse 2 est, par exemple, réalisée en acier.

L'avantage de cette géométrie est d'obtenir un jet d'eau "plat", c'est-à-dire que, une section normale du jet d'eau, à une distance d'environ 12 mm de la buse 2, présente une forme sensiblement elliptique avec un grand axe de l'ordre de 10 mm et un petit axe de l'ordre de 1,5 mm. La largeur "utile" du jet d'eau, c'est-à-dire la zone où la pression d'application de l'eau est maximale, est d'environ 3 à 4 mm.

Lors de l'application sur une surface de caoutchouc, le grand axe de l'ellipse, parallèle à la droite d'intersection des deux plans du dièdre 9, est perpendiculaire à la direction du déplacement de la surface de caoutchouc traitée relativement au jet d'eau. Cela permet de sensiblement augmenter, à chaque instant, la surface de caoutchouc traitée par le jet d'eau à vitesse donnée de déplacement relative entre le jet d'eau et la surface de caoutchouc.

De multiples conditions opératoires permettent d'effectuer le traitement de surfaces caoutchoutiques vulcanisées, avant collage, selon l'invention. Les conditions suivantes sont cependant particulièrement appropriée avec une buse 2 telle que celle précédemment décrite et ont été utilisées pour les essais décrits ci-après :
- pression d'alimentation de l'eau variable de 150 à 250 MPa ;
- distance entre la buse 2 et les surfaces à traiter 12 mm ;
- vitesse de défilement des surfaces caoutchoutiques vulcanisées 100 m/mn ;
- vitesse de déplacement de la buse 1 mm/s (cette vitesse est normale à la vitesse de défilement des surfaces caoutchoutiques vulcanisées).

La rugosité des surfaces caoutchoutiques, avant et après le traitement selon l'invention, a été caractérisée par les paramètres Rₐ, Rₘₐₓ, S, obtenus au moyen d'un profilomètre laser avec une longueur d'évaluation de 48 mm.
- Rₐ : rugosité moyenne selon DIN 4768, moyenne arithmétique de toutes les valeurs du profil de rugosité sur la longueur d'évaluation lₘ=48 mm ;
- Rₘₐₓ : rugosité maximale, écart vertical entre le point le plus haut et le point le plus bas du profil de rugosité sur la longueur totale d'évaluation lₘ=48 mm ;
- S : nombre de pics, nombre d'élévations du profil qui dépassent une ligne de coupe déterminée, ici à 20 micromètres de part et d'autre de la ligne moyenne du profil de rugosité.

Pour apprécier la nature de la rugosité des surfaces obtenues, on a aussi caractérisé l'une des surfaces proposées comme références par la Rubber Manufacturers Association, ces surfaces sont appelées ci-après "plaques RMA".

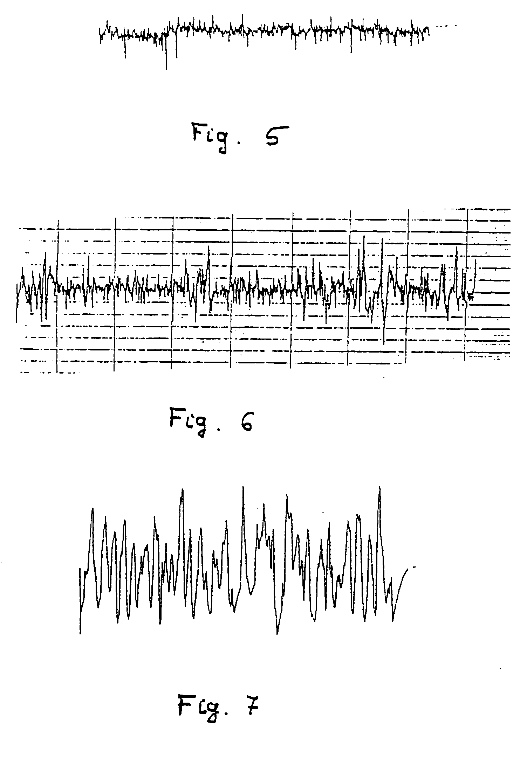

Les figures 5 à 7 présentent des profils de rugosité mesurés sur les échantillons suivants :
- échantillon 1 : surface d'un échantillon de mélange pour bande de roulement avant traitement selon l'invention et directement issu d'une cuisson en moule lisse (figure 5) (échelles : abscisses 1 mm pour 500 µm, ordonnées 1 mm pour 2,5 µm) ;
- échantillon 2 : surface du même échantillon de mélange pour bande de roulement après traitement selon l'invention avec une pression d'alimentation de l'eau de 200 MPa (figure 6) (échelles : abscisses 1 mm pour 500 µm, ordonnées 1 mm pour 10 µm) ;
- échantillon 3 : surface d'une plaque RMA 3, cette surface a une rugosité obtenue par cardage conseillée pour le rechapage (figure 7) (échelles : abscisses 1 mm pour 500 µm, ordonnées 1 mm pour 10 µm).

Le tableau suivant présente les résultats de caractérisation de rugosité des échantillons.

**Tableau 1**

| caractérisation de la rugosité des surfaces des échantillons de mélanges. | | | |
|---|---|---|---|
| | Echantillon 1 | Echantillon 2 | Echantillon 3 |
| Rₐ (µm) | 2,0 | 13,9 | 63,8 |
| Rₘₐₓ (µm) | 33,7 | 168,9 | 363,8 |
| S _{(±20 µm)} | 1 | 89 | 36 |

Ces mesures indiquent que, à partir d'une surface pratiquement lisse, le traitement de surfaces selon l'invention permet d'atteindre un niveau de Rₐ de 13,9 µm. Par rapport à l'échantillon de RMA 3, on constate des valeurs de Rₐ et Rₘₐₓ plus faibles, tout en ayant un nombre de pics S largement supérieur. Cela indique que la rugosité obtenue par le traitement selon l'invention confère une rugosité plus fine et plus régulière qu'un cardage. Les profils de rugosité présentés aux figures 6 et 7 le confirment.

De plus, la rugosité maximale obtenue indique que l'effet du traitement est limité, en profondeur, aux premiers dixièmes de millimètres des surfaces caoutchoutiques traitées.

Les tests de collage classiques réalisés en laboratoire, donc dans des conditions de réalisation optimales, avec des échantillons vulcanisés traités ou brossés ou cardés, ont confirmé la qualité du collage obtenu avec le traitement selon l'invention.

Le procédé de traitement de surfaces vulcanisées selon l'invention s'applique particulièrement au rechapage et à la réparation des pneumatiques.

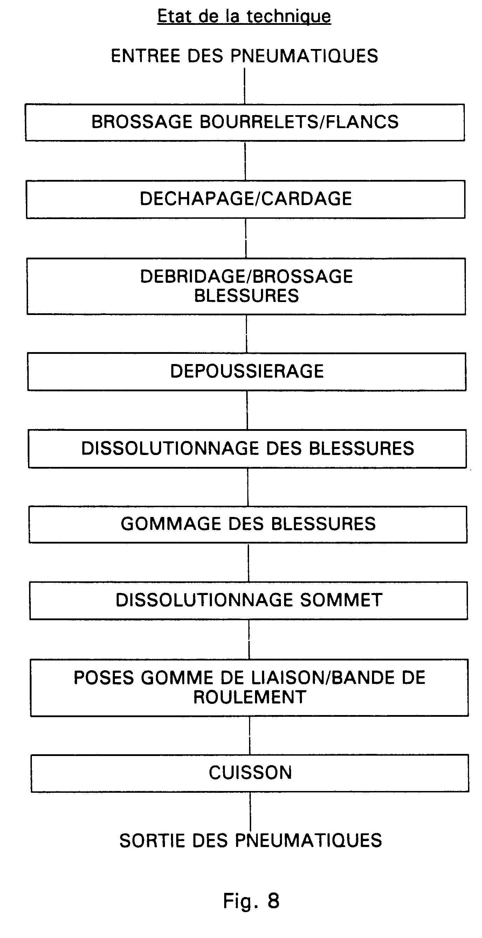

La figure 8 indique la succession des opérations traditionnellement suivies lors du rechapage d'un pneumatique. Après avoir brossé les bourrelets 12 et les flancs 11 des pneumatiques usés pour les nettoyer, on pratique le déchapage, c'est-à-dire l'enlèvement des restes de la bande de roulement 15 usée au moyen d'une cardeuse. Puis, les carcasses 3 sont inspectées et les blessures "débridées" c'est-à-dire brossées avec une brosse dure ou une petite carde pour enlever tous les matériaux endommagés. Le débridage est suivi d'un brossage avec une brosse douce pour éliminer les parties des matériaux brûlées par la brosse dure et nettoyer les cavités de tous débris et poussières. Après un dépoussiérage complémentaire, on applique sur les zones blessées une dissolution pour faciliter le collage ultérieur des surfaces. On laisse sécher cette dissolution puis on applique sur ces mêmes surfaces un matériau de réparation ou des emplâtres : le "gommage" des blessures. Le sommet 14 est alors dissolutionné à son tour. Après séchage de la dissolution, on pose une gomme de liaison 16 et la nouvelle bande de roulement 15, prévulcanisée ou non, sur la surface du sommet 14. Enfin, on réalise la vulcanisation de la gomme de liaison 16, des matériaux de réparation ainsi que de la nouvelle bande de roulement 15, si nécessaire.

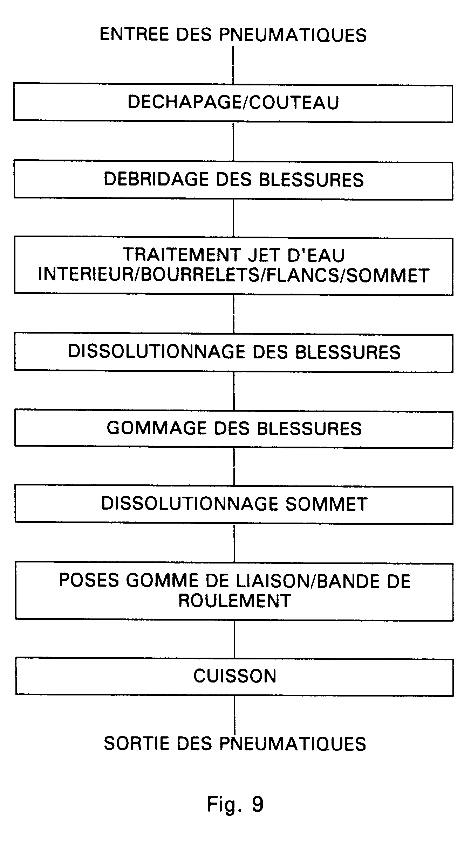

La figure 9 indique les opérations de rechapage et de réparation avec application du traitement de surface selon l'invention. Les pneumatiques sont directement déchapés avec un couteau de déchapage. Les blessures sont ensuite débridées avec un petit outil rotatif coupant à lame cylindrique. Cet outil permet d'enlever toutes les parties endommagées et laisse les surfaces sensiblement lisses. L'ensemble des surfaces intérieures 13 et extérieures 11, 12, 14, de la carcasse 3 de pneumatique est alors traité par l'application d'un jet d'eau à haute pression au moyen du dispositif présenté à la figure 1 et dans les conditions précédemment décrites. Les flancs 11, les bourrelets 12 et l'intérieur 13 sont traités par un jet d'eau appliqué avec une pression d'alimentation de l'ordre de 150 MPa. Enfin les surfaces du sommet 14 et des épaules 19 sont traitées avec une pression d'application de l'ordre de 200 MPa. Après séchage, par exemple en étuve, on met une dissolution sur toutes les surfaces des blessures. Après le séchage de cette dissolution, on applique du matériau de réparation ou des emplâtres sur les zones blessées. La dissolution du sommet 14, les poses de la gomme de liaison 16 et de la bande de roulement 15 sur le sommet 14 de la carcasse 3 et la vulcanisation de la gomme de liaison 16, des matériaux de réparation ainsi que de la nouvelle bande de roulement 15 si nécessaire, sont enfin effectuées comme précédemment.

Le traitement selon l'invention a ainsi comme avantages de permettre l'utilisation d'outils de coupe à froid tels que des couteaux de déchapage, lors du déchapage, ou des outils à lame cylindrique rotative, lors du débridage des blessures, sans qu'il soit ultérieurement nécessaire d'effectuer une opération de cardage ou de brossage. Cela évite l'installation de dispositifs d'aspiration et d'évacuation des poudrettes. Un autre avantage important est que ce traitement peut être appliqué sur l'intégralité des surfaces à traiter, quelles que soient leurs géométries. Les conditions de travail dans l'atelier sont aussi très fortement améliorées.

Les conditions du traitement de surface des flancs et de l'intérieur du pneumatique sont moins sévères que dans le cas du sommet et des épaules. En effet, ce traitement ne nécessite pas d'obtenir une rugosité de surface aussi marquée. Il doit fournir un état de surface approprié au collage ultérieur éventuel de matériau de réparation ou d'emplâtres.

Bien entendu, le traitement de surface, selon l'invention, est aussi très efficace dans le cas des surfaces de sommet cardées. Dans ce cas, il permet d'éliminer les particules superficielles dégradées notamment par échauffement. Il assure aussi un traitement de toute la surface du sommet, par exemple des zones qui peuvent être non cardées en raison d'un resculptage manuel des sculptures. Il permet enfin une homogénéisation de la rugosité de surface.

D'autre part le nombre des opérations de réparation et le temps nécessaire pour chacune d'elles sont nettement réduits.

Le traitement selon l'invention peut aussi être appliqué à la fabrication de bandes de roulement 15 prémoulées et prévulcanisées pour le rechapage.

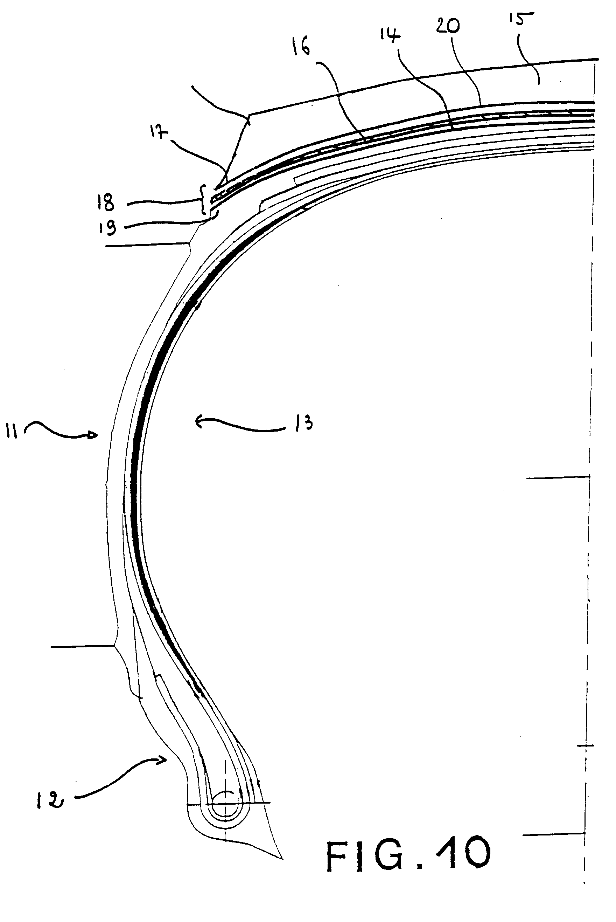

Deux procédés sont actuellement utilisés pour créer un état de surface propre à un bon collage ultérieur sur un sommet 14 de pneumatiques (fig. 10) :
- après vulcanisation de la bande de roulement 15, on brosse la semelle 20 de ladite bande de roulement 15, puis on applique une dissolution et on place une bande de polythène comme protection ;
- on place avant cuisson, sous la semelle 20 de ladite bande de roulement 15 un tissu de polyester qui va se coller étroitement à ladite semelle 20 pendant la vulcanisation. Ce tissu de polyester va protéger la semelle 20 avant son application sur le sommet 14 du pneumatique. Juste avant cette application, on arrache ladite feuille, ce qui crée une rugosité de surface appropriée au collage.

L'application du traitement selon l'invention à la fabrication de bandes de roulement 15 prémoulées et prévulcanisées consiste à substituer à l'opération de brossage après cuisson une application d'un jet d'eau à haute pression pour créer la rugosité de surface appropriée pour le collage ultérieur sur le sommet 14 d'une carcasse de pneumatique. Ce procédé remplace aussi avantageusement l'application coûteuse du tissu de polyester sur la semelle 20 de la bande de roulement 15 avant la cuisson.

Ce procédé est applicable à tous les types de bande de roulement, notamment les "bandes plates" 24 (fig. 11) et les bandes de roulement en anneau 29.

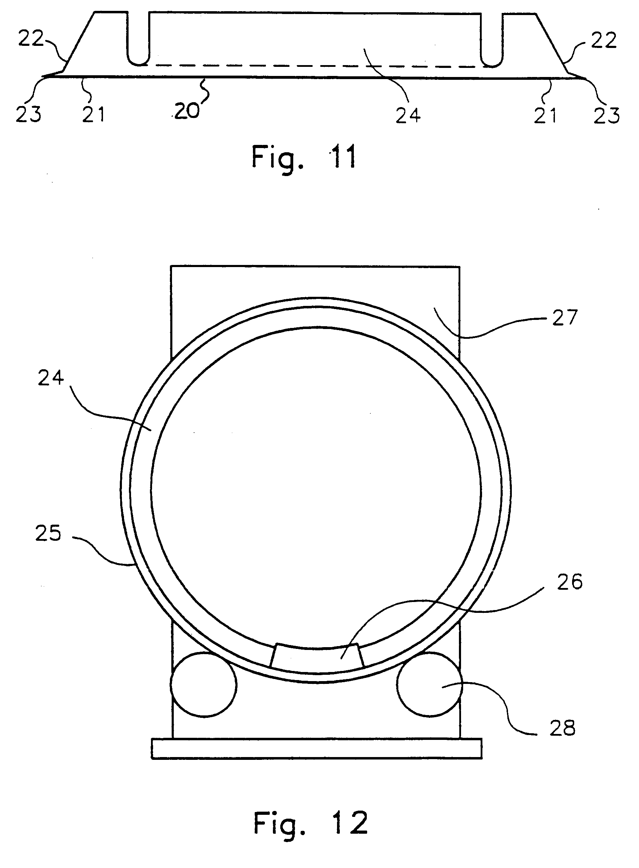

Un dispositif pour réaliser ce traitement d'une bande de roulement prévulcanisée, par exemple, une "bande plate" 24, est présenté à la figure 12. La bande plate 24 (fig. 11) est enroulée contre la surface intérieure d'une virole cylindrique 25 montée sur un bâti 27. Les sculptures de ladite bande plate 24 sont placées contre ladite virole 25. On bloque la bande plate 24 au moyen d'un taquet 26. On met en rotation ladite virole cylindrique 25 et la bande plate 24 au moyen des supports rotatifs 28, puis on vient réaliser le traitement au moyen du dispositif représenté à la figure 1.

Ce procédé de fabrication d'une bande de roulement 15, 24, 29 prévulcanisée peut aisément et avantageusement inclure les bords latéraux intérieurs 21 et extérieurs 22 de ladite bande de roulement 15, 24, 29, ce qui est beaucoup plus difficile à réaliser lors d'une opération de brossage. On entend par bords latéraux intérieurs 21, les extrémités latérales de la semelle 20 de la bande de roulement, et par bords latéraux extérieurs 22 les extrémités des faces latérales de la bande de roulement adjacentes à la semelle 20 de ladite bande de roulement 15, 24, 29.

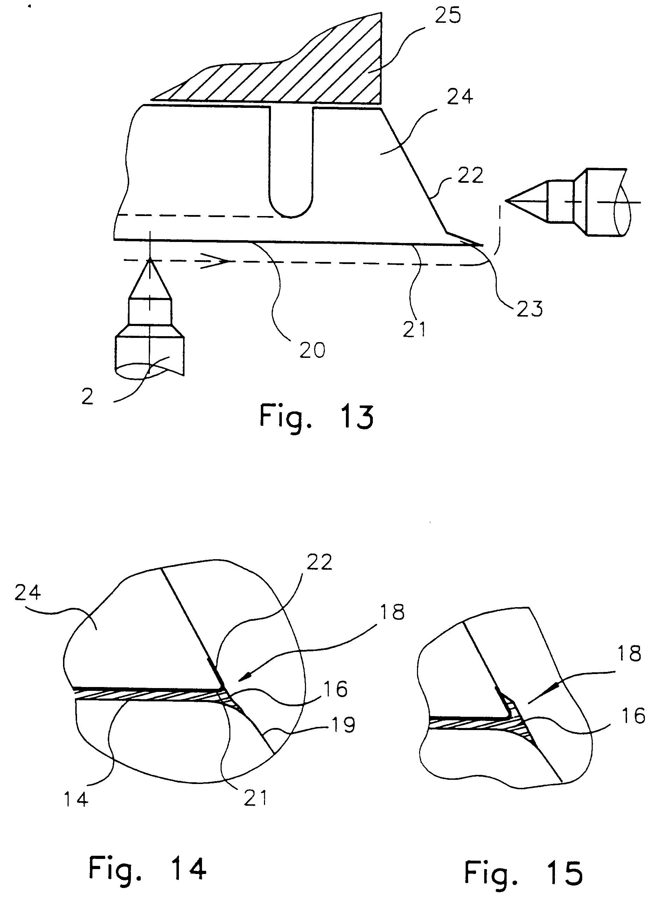

Cela présente l'avantage de traiter toutes les surfaces qui peuvent venir en contact avec la gomme de liaison 16, notamment lorsque ladite gomme de liaison 16 déborde sur les bords latéraux 21, 22, de ladite bande de roulement 15, 24, 29, pendant la phase ultérieure de cuisson de l'assemblage carcasse 3 et bande de roulement (fig. 15). Une première source de décollages dans la zone critique 18 aux deux bords latéraux de la bande de roulement 15, 24, 29 est ainsi supprimée (fig. 10).

Une deuxième source de décollages dans cette zone critique 18 est due à la présence de bavures de moulage 23 aux deux bords latéraux de la bande de roulement 15, 24, 29. En effet, lors du moulage des bandes de roulement, il est prévu que l'excès de mélange puisse fluer sur les bords latéraux et constituer ainsi des bavures. Ces bavures sont des languettes fines de quelques dixièmes de millimètres d'épaisseur, qui doivent être retirées après la cuisson, par exemple par une découpe avec un couteau.

Lorsque cette découpe est mal faite, ou est incomplète, les parties restantes de ces bavures deviennent rapidement des amorces de décollage.

Le procédé de préparation au collage de la semelle 20 de la bande de roulement 15, 24, 29 peut avantageusement comprendre une phase de découpe de ces bavures 23 au moyen du jet d'eau sous pression.

La figure 11 présente une bande de roulement dite bande plate 24. Dans ce cas, les bavures 23 se trouvent aux deux bords latéraux de la bande de roulement 24. Pour les découper, il suffit, pendant le traitement de la semelle 20, d'appliquer le jet d'eau avec des conditions plus sévères sur les extrémités de la bande de roulement 24, en réduisant la vitesse de défilement par exemple.

La figure 13 indique le chemin parcouru par la buse 2 lors du traitement de l'extrémité latérale d'une semelle 20 d'une bande plate 24 qui comporte une bavure de moulage 23. L'application du jet d'eau sur la bavure de moulage 23, par exemple en réduisant la vitesse de déplacement de la buse relativement à la surface de ladite bavure, suffit pour la découper de façon très propre. Le traitement inclut, sur quelques millimètres, le bord extérieur 22 de la bande plate pour les raisons exposées précédemment.

La figure 14 présente la géométrie de la liaison mécanique obtenue après l'assemblage sur la carcasse 3 et la cuisson. La gomme de liaison 16 n'est en contact qu'avec des surfaces de matériaux vulcanisés traités selon l'invention, y compris lorsque ladite gomme de liaison 16 remonte contre l'extrémité 22 par fluage lors de la cuisson (fig. 15).

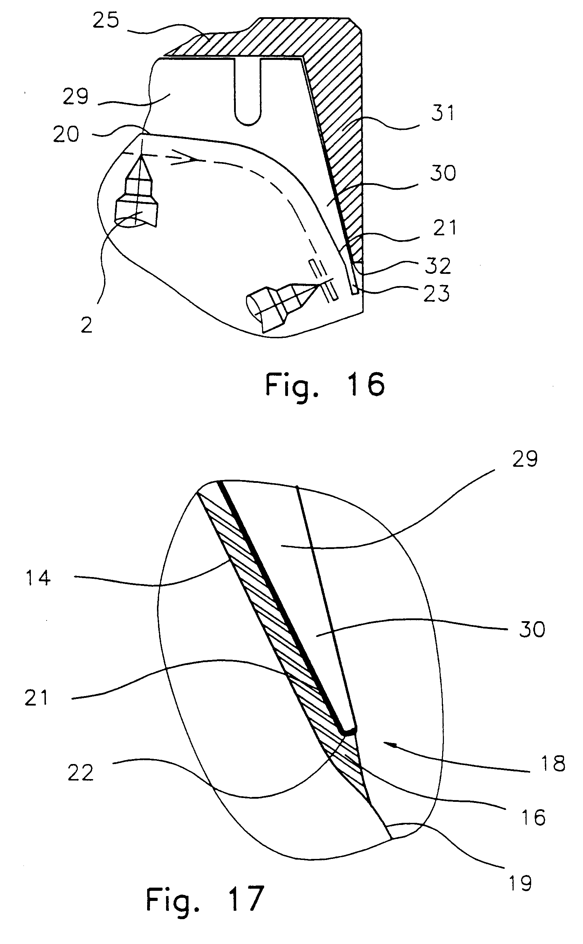

Le traitement d'une bande de roulement en anneau 29 comportant des bavures de moulage 23 est présentée à la figure 16. Dans ce cas, la virole 25 a une forme adaptée à la géométrie extérieure de la bande de roulement en anneau 29. Cette virole 25 comprend une butée latérale 31 contre laquelle viennent s'appuyer les ailes 30 de la bande de roulement en anneau 29. En complément du traitement de l'intégralité de la semelle 20, la buse 2 vient, par exemple, passer plusieurs fois au niveau de la bavure de moulage 23, ce qui applique ladite bavure de moulage 23 contre la butée latérale 31 de la virole 25. L'application de ladite bavure 23 contre l'angle vif 32 de la butée 31 suffit pour découper ladite bavure 23 au niveau de cet angle 32.

La figure 17 présente la géométrie de la liaison mécanique obtenue après cuisson dans le cas d'une telle bande à anneau 29 avec des ailes 30. A nouveau, la gomme de liaison 16 n'est en contact qu'avec des surfaces caoutchoutiques vulcanisées traitées selon l'invention et, en conséquence, la fiabilité d'une telle liaison mécanique est excellente.

Des essais ont été réalisés pour vérifier la qualité du collage réalisé après traitement selon l'invention.

A titre d'exemple :
- quatre pneumatiques 315/80 R 22.5 XDA neufs ont été déchapés avec un couteau de déchapage, puis la surface de leur sommet a été traitée par l'application d'un jet d'eau à haute pression, deux avec une pression d'alimentation de 150 MPa, deux avec 230 MPa. La fin des procédures de rechapage a ensuite été réalisée comme traditionnellement.
   Les tests effectués sur véhicule pour vérifier particulièrement la tenue mécanique des zones critiques 18 n'ont permis d'observer aucun décollage dans ces zones 18 pour les quatre pneumatiques considérés (fig. 10).
- Des pneumatiques préparés comme précédemment, mais avec des pressions d'application de 150, 200, 230 MPa, ont aussi été soumis à un test de martèlement du sommet qui entraîne la création de fissures et leur progression rapide dans les zones de qualité défectueuse du collage entre la bande de roulement 15 et le sommet 14.
   Dans tous les cas, le déchapage des pneumatiques après la fin du test n'a révélé aucune zone de moindre collage.

Ces deux tests prouvent la qualité du collage obtenu après un traitement selon l'invention lors du rechapage de pneumatiques.
- Cas d'une réparation de la "gomme intérieure" d'un pneumatique "tubeless" c'est-à-dire de la nappe de mélange placée sous la nappe carcasse du pneumatique et qui assure l'étanchéité du pneumatique en remplaçant la chambre à air :
   * Quatre pneumatiques ont eu une même zone de ladite gomme intérieure réparée. Deux ont été brossés à un RMA 2, deux ont été traités avec une pression d'application de 150 MPa. Au bout d'une heure, sur un pneumatique brossé, et un traité, après dissolutionnage, on pose un emplâtre.
   * Au bout de 64 heures, sur les deux pneumatiques restants, après dissolutionnage, on pose un emplâtre.
   * Les quatre emplâtres sont vulcanisés de façon connue, puis on arrache lesdits emplâtres.
   * Pour les deux pneumatiques ayant subi un brossage, on arrive à décoller au niveau de la liaison entre la gomme intérieure et le matériau de l'emplâtre. En revanche, pour les deux pneumatiques traités selon l'invention, le décollage a eu lieu entre la gomme intérieure et le calandrage de la nappe carcasse.

En conclusion, ces essais montrent une meilleure qualité de la liaison entre l'emplâtre et la gomme intérieure après un traitement selon l'invention comparé au brossage traditionnel.

Enfin, ce procédé peut aussi s'appliquer à la fabrication de pneumatiques neufs. Dans ce cas, on réalise une carcasse 3 de pneumatique prévulcanisée en moule lisse. On réalise aussi une bande de roulement 15, 29 prémoulée et prévulcanisée, de préférence en forme d'anneau. On traite ensuite le sommet 14 de la carcasse 3 et/ou la semelle 20 de la bande de roulement 15, 29 selon l'invention. On applique une gomme de liaison 16. Enfin, on réalise l'assemblage par des moyens connus suivi de la vulcanisation de la gomme de liaison 16.

Ce procédé a l'avantage de supprimer les problèmes liés au moulage des sculptures lors de la cuisson du pneumatique, par exemple l'incertitude sur la position réelle des fils de renforcement due à la non maîtrise des flux de gomme, tout en assurant la réalisation de pneumatiques d'excellente qualité.

## Revendications

1. Procédé de rechapage de pneumatiques dans lequel, après avoir retiré ce qui reste de la bande de roulement usée par usinage avec des moyens connus et avant d'appliquer une nouvelle bande de roulement (15, 24, 29), on traite la surface du sommet (14) et des épaules (19) dudit pneumatique par application d'un jet d'eau à haute pression pour créer une rugosité de surface et éliminer des particules superficielles.

2. Procédé de rechapage selon la revendication 1, dans lequel, après avoir été traitée, la rugosité Rₐ de la surface du sommet (14) de la carcasse (3) est supérieure ou égale à 10 micromètres.

3. Procédé de réparation d'un pneumatique ayant au moins une zone blessée dans lequel, après avoir retiré de ladite zone blessée, avec des moyens connus, les matériaux dégradés et avant d'appliquer un matériau d'apport ou un emplâtre de réparation sur ladite zone blessée, on traite la surface de ladite zone blessée par application d'un jet d'eau à haute pression pour créer une rugosité de surface et éliminer des particules superficielles.

4. Procédé de fabrication d'une bande de roulement (15, 24, 29) prémoulée et prévulcanisée dans lequel, à la sortie du moule de vulcanisation, on applique sur la surface de la semelle (20) de ladite bande de roulement un jet d'eau à haute pression pour créer une rugosité de surface.

5. Procédé de fabrication d'une bande de roulement (15, 24, 29) selon la revendication 4, dans lequel la surface traitée par application d'un jet d'eau à haute pression inclut les bords intérieur (21) et extérieur (22) des ailes (17) de ladite bande de roulement.

6. Procédé de fabrication d'une bande de roulement (15, 24, 29) selon l'une des revendications 4 ou 5, dans lequel on découpe, au moyen du jet d'eau à haute pression, des bavures de moulage (23) de ladite bande de roulement.

7. Procédé de fabrication d'un pneumatique dans lequel, après avoir réalisé une bande de roulement (15, 24, 29) prévulcanisée, ainsi qu'une carcasse (3) de pneumatique prévulcanisée, et avant leur assemblage avec des moyens connus, on traite la surface du sommet (14) et des épaules (19) de ladite carcasse (3) par application d'un jet d'eau à haute pression pour créer une rugosité de surface.

8. Procédé de fabrication d'un pneumatique selon la revendication 7, dans lequel ladite bande de roulement (15, 24, 29) est réalisée selon le procédé de l'une des revendications 5 ou 6.

9. Procédé selon l'une des revendications 1 à 8, dans lequel une section du jet d'eau, normale à la direction d'application dudit jet d'eau, a une forme sensiblement elliptique avec un rapport entre le grand axe de l'ellipse et le petit axe de l'ellipse supérieur à 6, et la direction du déplacement relatif dudit jet d'eau par rapport auxdites surfaces traitées est perpendiculaire au grand axe de ladite ellipse de ladite section du jet d'eau.

10. Procédé selon l'une des revendications 1 à 9, dans lequel la pression d'alimentation dudit jet d'eau est comprise entre 100 et 250 Mpa, et la vitesse de déplacement relative entre ledit jet d'eau et lesdites surfaces traitées est comprise entre 50 et 300 m/mn.

11. Procédé selon l'une des revendications 1 à 10, dans lequel ledit jet d'eau à haute pression est projeté sur lesdites surfaces traitées à une distance comprise entre 8 et 20 mm.

12. Dispositif de mise en oeuvre du procédé de traitement selon l'une des revendications 1 à 12, dans lequel, utilisant de l'eau pressurisés, il comprend une conduite d'alimentation (1) de l'eau pressurisée, ladite conduite étant terminée par une buse (2), et comporte des moyens de support et de déplacement relatif desdites surfaces traitées par rapport à ladite buse (2), et dans lequel, ladite buse (2) a un orifice (10) de sortie de l'eau obtenu par l'intersection d'un cône (8) et d'un dièdre (9), l'axe dudit cône (8) étant perpendiculaire à la droite d'intersection des deux plans dudit dièdre (9).

13. Dispositif selon la revendication 12, dans lequel une projection dudit orifice de sortie (10), selon un plan perpendiculaire à l'axe dudit cône (8), a une forme elliptique avec un rapport entre le grand axe de l'ellipse et le petit axe de l'ellipse de l'ordre de 1,4.

14. Dispositif selon la revendication 12, dans lequel l'angle au sommet dudit cône est compris entre 25 et 35°, et l'angle dudit dièdre (9) est compris entre 65 et 70°.

15. Dispositif selon l'une des revendications 13 ou 14, dans lequel la longueur du grand axe de ladite ellipse de ladite projection plane dudit orifice de sortie (10) de la buse (2) est comprise entre 0,30 et 0,40 mm.

## Claims

1. A process for recapping tyres in which, once what is left of the worn tread has been removed by machining using known means, and before a new tread (15, 24, 29) is applied, the surface of the crown (14) and shoulders (19) of said tyre is treated by application of a high-pressure water jet to create surface roughness and eliminate surface particles.

2. A recapping process according to Claim 1, in which, once treated, the roughness Rₐ of the surface of the crown (14) of the carcass (3) is greater than or equal to 10 micrometres.

3. A repair process for a tyre having at least one damaged zone in which, once the degraded materials have been removed from said damaged zone using known means, and before an added material or a repair patch is applied to said damaged zone, the surface of said damaged zone is treated by application of a high-pressure water jet to create surface roughness and to eliminate surface particles.

4. A process for manufacturing a premoulded, prevulcanised tread (15, 24, 29), in which, upon emerging from the vulcanisation mould, a high-pressure water jet is applied to the surface of the sole (20) of said tread to create surface roughness.

5. A process for manufacturing a tread (15, 24, 29) according to Claim 4, in which the surface treated by application of a high-pressure water jet includes the inner (21) and outer (22) edges of the wings (17) of said tread.

6. A process for manufacturing a tread (15, 24, 29) according to one of Claims 4 or 5, in which the moulding burrs (23) are cut off from said tread by means of the high-pressure jet of water.

7. A process for manufacturing a tyre, in which, once a prevulcanised tread (15, 24, 29) has been produced, and a prevulcanised tyre carcass (3), and before assembly thereof using known means, the surface of the crown (14) and shoulders (19) of said carcass (3) is treated by application of a high-pressure water jet to create surface roughness.

8. A process for manufacturing a tyre according to Claim 7, in which said tread (15, 24, 29) is produced according to the process of one of Claims 5 or 6.

9. A process according to one of Claims 1 to 8, in which a section of the water jet, normal to the direction of application of said water jet, has a substantially elliptical shape with a ratio of the major axis of the ellipse to the minor axis of the ellipse of more than 6, and the direction of relative displacement of said water jet with respect to said treated surfaces is perpendicular to the major axis of said ellipse of said section of the water jet.

10. A process according to one of Claims 1 to 9, in which the admission pressure of said water jet is between 100 and 250 MPa, and the relative speed of displacement between said water jet and said treated surfaces is between 50 and 300 m/min.

11. A process according to one of Claims 1 to 10, in which said high-pressure water jet is sprayed on to said treated surfaces at a distance of between 8 and 20 mm.

12. A device for implementing the treatment process according to one of Claims 1 to 12, in which, using pressurised water, it comprises a feed line (1) for the pressurised water, said line ending in a nozzle (2), and comprises means for support and relative displacement of said treated surfaces relative to said nozzle (2), and in which said nozzle (2) has a water outlet orifice (10) obtained by the intersection of a cone (8) and a dihedron (9), the axis of said cone (8) being perpendicular to the straight line intersecting the two planes of said dihedron (9).

13. A device according to Claim 12, in which a projection of said outlet orifice (10), in a plane perpendicular to the axis of said cone (8), has an elliptical shape with a ratio of the major axis of the ellipse to the minor axis of the ellipse of the order of 1.4.

14. A device according to Claim 12, in which the angle at the apex of said cone is between 25 and 35° and the angle of said dihedron (9) is between 65 and 70°.

15. A device according to one of Claims 13 or 14, in which the length of the major axis of said ellipse of said flat projection of said outlet orifice (10) of the nozzle (2) is between 0.30 and 0.40 mm.

## Patentansprüche

1. Verfahren zum Runderneuern von Reifen, in dem, nachdem man das, was von der abgenutzten Lauffläche übriggeblieben ist, durch Abtragung mit bekannten Mitteln abgenommen hat, und vor dem Aufbringen einer neuen Lauffläche (15,24,29), man die Oberfläche des Scheitels (14) und die Schultern (19) des genannten Reifens durch Aufbringung eines Hochdruck-Wasserstrahls behandelt, um eine Oberflächenrauhigkeit zu erzeugen und Oberflächenpartikel zu entfernen.

2. Runderneuerungsverfahren nach Anspruch 1, in dem nach Vornahme der Behandlung die Oberflächenrauhigkeit Rₐ des Scheitels (14) der Karkasse (3) größer oder gleich 10 Mikrometer ist.

3. Runderneuerungsverfahren eines Reifens, der mindestens eine beschädigte Zone aufweist, in dem man, nachdem man die schadhaften Materialien der genannten, beschädigten Zone mit bekannten Mitteln entfernt hat, und vor der Aufbringung eines Ergänzungsmaterials oder eines Reparaturflickens auf der genannten, beschädigten Zone, die Oberfläche der genannten, beschädigten Zone durch Aufbringen eines Hochdruck-Wasserstrahls behandelt, um eine Oberflächenrauhigkeit zu erzeugen und Oberflächenpartikel zu entfernen.

4. Herstellungsverfahren für eine vorgeformte und vorvulkanisierte Lauffläche (15,24,29), bei dem man am Austritt der Vulkanisierform auf die Oberfläche der Sohle (20) der genannten Lauffläche einen Hochdruck-Wasserstrahl aufbringt, um eine Oberflächenrauhigkeit zu erzeugen.

5. Herstellungsverfahren für eine Lauffläche (15,24,29) nach Anspruch 4, worin die durch einen Hochdruck-Wasserstrahl behandelte Oberfläche die Innenränder (21) und Außenränder (22) der Flügel (17) der genannten Lauffläche mitumfaßt.

6. Verfahren zur Herstellung einer Lauffläche (15,24,29) nach einem der Ansprüche 4 oder 5, worin man mittels des Hochdruck-Wasserstrahls Formgrate (23) der genannten Lauffläche abschneidet.

7. Herstellungsverfahren eines Reifens, worin man nach der Herstellung einer vorvulkanisierten Lauffläche (15,24,29) sowie einer vorvulkanisierten Reifenkarkasse (3) und vor ihrem Zusammenbau durch bekannte Mittel die Oberfläche des Scheitels (14) und die Schultern (19) der genannten Karkasse (3) durch Aufbringung eines Hochdruck-Wasserstrahls behandelt, um eine Oberflächenrauhigkeit zu erzeugen.

8. Verfahren zur Herstellung eines Reifens nach Anspruch 7, worin die genannte Lauffläche (15,24,29) nach dem Verfahren eines der Ansprüche 5 oder 6 hergestellt ist.

9. Verfahren nach einem der Ansprüche 1 bis 8, worin ein Querschnitt des Wasserstrahls senkrecht zur Auftragungsrichtung des genannten Wasserstrahls eine im wesentlichen elliptische Form hat, mit einem Verhältnis zwischen der großen Ellipsenachse und der kleinen Ellipsenachse, das größer ist als 6, und die Richtung der Relativbewegung des genannten Wasserstrahls in Bezug auf die genannten behandelten Oberflächen senkrecht zur großen Achse der genannten Ellipse des genannten Querschnitts des Wasserstrahls verläuft.

10. Verfahren nach einem der Ansprüche 1 bis 9, worin der Einspeisungsdruck des genannten Wasserstrahls zwischen 100 und 250 MPa liegt, und die relative Bewegungsgeschwindigkeit zwischen dem genannten Wasserstrahl und den genannten behandelten Oberflächen zwischen 50 und 300 m/min liegt.

11. Verfahren nach einem der Ansprüche 1 bis 10, worin der genannte Hochdruck-Wasserstrahl auf die genannten Oberflächen aus einem Abstand aufgestrahlt wird, der zwischen 8 und 20 mm liegt,

12. Vorrichtung zur Durchführung des Behandlungsverfahrens nach einem der Ansprüche 1 bis 12, worin unter Benutzung von Druckwasser eine Einspeisungsleitung (1) für Druckwasser vorliegt, die genannte Leitung in einer Düse (2) endet, und sie Mittel zum Tragen und zur Relativbewegung der genannten behandelten Oberflächen in Bezug auf die genannte Düse (2) aufweist, und worin die genannte Düse (2) eine Austrittsöffnung (10) für Wasser aufweist, die durch den Schnitt eines Kegels (8) und eines Dieders (9) gewonnen wurde, wobei die Achse des genannten Kegels (8) senkrecht zur Schnittlinie der beiden Ebenen des genannten Dieders (9) verläuft.

13. Vorrichtung nach Anspruch 12, worin eine Projektion der genannten Austrittsöffnung (10) auf eine Achse senkrecht zur Achse des genannten Kegels (8) eine elliptische Form aufweist, mit einem Verhältnis zwischen der großen Ellipsenachse und der kleinen Ellipsenachse in der Größenordnung von 1,4.

14. Vorrichtung nach Anspruch 12, worin der Scheitelwinkel des genannten Kegels zwischen 25 und 35° liegt und der Winkel des genannten Dieders (9) zwischen 65 und 70° liegt.

15. Vorrichtung nach einem der Ansprüche 13 oder 14, worin die Länge der großen Achse der genannten Ellipse der genannten ebenen Projektion der genannten Austrittsöffnung (10) der Düse (2) zwischen 0,30 und 0,40 mm liegt.
